(19) Europäisches Patentamt
European Patent Office
Office européen des brevets

(11) **EP 1 503 861 B1**

## (12) FASCICULE DE BREVET EUROPEEN

(45) Date de publication et mention
de la délivrance du brevet:
**10.10.2007 Bulletin 2007/41**

(21) Numéro de dépôt: **02738234.0**

(22) Date de dépôt: **10.05.2002**

(51) Int Cl.:
***B05B 7/14*** *(2006.01)*

(86) Numéro de dépôt international:
**PCT/FR2002/001589**

(87) Numéro de publication internationale:
**WO 2003/099450 (04.12.2003 Gazette 2003/49)**

(54) **PROCEDE DE REGULATION DU DEBIT DE POUDRE TRANSPORTEE PAR UN FLUX D'AIR, ET DISPOSITIF POUR SA MISE EN OEUVRE**

VERFAHREN UND EINRICHTUNG ZUR REGELUNG DER PULVERMENGE IN EINEM TRÄGERGAS

METHOD FOR REGULATING FLOW OF POWDER CARRIED BY AN AIR STREAM, AND DEVICE THEREFOR

(84) Etats contractants désignés:
**AT BE CH CY DE DK ES FI FR GB GR IE IT LI LU MC NL PT SE TR**

(43) Date de publication de la demande:
**09.02.2005 Bulletin 2005/06**

(73) Titulaire: **EISENMANN Anlagenbau GmbH & Co. KG**
**71032 Böblingen (DE)**

(72) Inventeurs:
• **RODRIGUES, José**
**38650 St-Guillaume,Georgie Sud & I. Sand (FR)**
• **DOBROWOLSKI, Flavien**
**F-38650 SINARD (FR)**

(74) Mandataire: **Ostertag, Ulrich et al**
**Ostertag & Partner**
**Patentanwälte**
**Epplestrasse 14**
**70597 Stuttgart (DE)**

(56) Documents cités:
**DE-A- 19 838 269         DE-A- 19 838 276**
**DE-A- 19 838 279         FR-A- 2 824 283**
**US-A- 5 702 209          US-A- 6 155 752**

## Description

La présente invention concerne un procédé de régulation du débit de poudre dans un dispositif de fourniture d'un débit de poudre transportée par un flux d'air. Ce procédé s'applique plus particulièrement à un système de pompe à poudre , avec aspiration de la poudre par effet Venturi, depuis un récipient, au travers d'un injecteur recevant à son entrée un débit d'air d'injection et avec injection, vers la sortie de l'injecteur, d'un débit d'air supplémentaire dit air de dilution, s'ajoutant au débit d'air d'injection. Un tel système est applicable en particulier à l'alimentation, par un conduit plus ou moins long, d'un appareil de projection de peinture ou autre produit de revêtement en poudre, par exemple pour alimenter des robots de peinture utilisés dans l'industrie automobile.

Dans ce genre de systèmes, un débit d'air principal, dit air d'injection, permet d'aspirer la poudre dans un récipient tel que bac, rempli de poudre, grâce à un injecteur utilisant l'effet Venturi. Le débit de poudre résultant de cette aspiration augmente avec le débit d'air d'injection, donc avec la pression d'alimentation.

Cependant, pour pouvoir transporter la poudre sur une grande distance, sans pulsation, il est nécessaire que la vitesse de l'air dans le conduit d'alimentation de l'appareil de projection soit supérieure à environ 10 mètres/seconde. Or, pour les faibles débits massiques de poudre, inférieurs typiquement à 6 kilogrammes/heure, la vitesse de l'air est inférieure à la valeur précitée. On injecte alors, à la sortie de la"pompe à poudre", un débit d'air supplémentaire appelé air de dilution, afin d'élever de nouveau la vitesse de l'air dans le conduit d'alimentation de l'appareil de projection.

Le problème ici rencontré est que le débit d'air de dilution fait chuter le débit de poudre, pour un débit constant d'air d'injection. Il faut donc compenser ce phénomène, en augmentant le débit d'air d'injection, pour avoir toujours le débit de poudre désiré. Un système particulier de régulation, capable d'ajuster automatiquement les débits d'air d'injection et d'air de dilution afin d'obtenir le débit de poudre désiré, s'avère donc nécessaire pour assurer le fonctionnement convenable de la pompe à poudre.

De telles pompes à poudre sont déjà décrites dans de nombreux documents, par exemple dans les demandes de brevets FR 2 680416, EP 0 636 420, EP 0 686 430, WO 00/10726 et WO 00/10727. D'une manière générale, ces documents prévoient, en tant que systèmes de régulation, des asservissements en boucle fermée, qui exploitent d'une part des valeurs de consigne, et d'autre part des valeurs réelles instantanées fournies par des capteurs de pression ou de débit,pour l'air et/ou pour la poudre, capteurs qui sont disposés en divers points du dispositif. Il en résulte des réalisations relativement compliquées et coûteuses.

DE-A-198 38 276 (correspondant au préambule de la revendication indépendante 3 de produit) révèle un dispositif d'injection et de transport de poudre, plus particulièrement pour l'alimentation d'un appareil de projection de peinture ou autre produit de revêtement en poudre. Le dispositif d'injection et de transport de poudre comprenant, en combinaison: un injecteur relié à une arrivée d'air d'injection depuis une source extérieure, à une arrivée de poudre depuis un récipient, et à une arrivée d'air de dilution depuis une source extérieure; une première électrovanne proportionnelle placée sur l'arrivée d'air d'injection; une seconde électrovanne proportionnelle placée sur l'arrivée d'air de dilution; un module de réglage recevant la consigne de débit de poudre, et possédant des sorties reliées aux électrovannes proportionnelles respectivement placées sur les arrivées d'air d'injection et d'air de dilution. Le module de réglage comprenant des mémoires pour stocker le débit d'air total minimum, pour déterminer, en tenant compte de la consigne de débit de poudre les débits d'air d'injection et d'air de dilution, et en déduire les valeurs correspondantes des signaux de réglage des deux électrovannes proportionnelles.

La présente invention vise à éviter les inconvénients connues, en fournissant un procédé de régulation procurant une réalisation simplifiée et économique, avec suppression de tous capteurs de pression et/ou de débit, pour l'ajustage automatique des débits d'air d'injection et de dilution, tout en procurant un fonctionnement satisfaisant, c'est-à-dire l'obtention du débit de poudre désiré, et ceci sans pulsation.

A cet effet, l'invention concerne un procédé de régulation du débit de poudre dans un dispositif de fourniture d'un débit de poudre transportée par un flux d'air, du genre défini en introduction, dans lequel:

- le débit de poudre (Dp) est considéré comme proportionnel au débit d'air d'injection (Dai) et au débit d'air de dilution (Dad), selon la formule:
  Dp = A* Dai-B* Dad, dans laquelle A et B sont des coefficients déterminés à partir des mesures effectuées sur un injecteur à effet Venturi du type concerné;
- une valeur minimale Dam du débit d'air total (Dt = Dai + Dad), correspondant à une vitesse minimale du flux d'air dans le conduit d'alimentation, est fixée,
- pour une valeur de consigne du débit de poudre (Dp), le débit d'air d'injection (Dai) est déduit de la formule précédente en supposant dans un premier temps qu'il n'y a pas d'air de dilution:

$$Dai = Dp/A$$

- si le débit d'air d'injection (Dai) ainsi déterminé est supérieur au débit minimum (Dam), cette valeur de débit d'air d'injection (Dai) est retenue, et le débit d'air de dilution (Dad) est choisi comme nul, ou
- si le débit d'air d'injection (Dai) ainsi déterminé est inférieur au débit minimum (Dam), on suppose que l'on ajoute de l'air de dilution de telle manière que Dam = Dai + Dad et on déduit Dai et Dad des formules suivantes:

$$\text{Dai} = (\text{Dp} + \text{B. Dam})/ (\text{A} + \text{B})$$

$$\text{Dad} = (\text{A.Dam-Dp})/ (\text{A} + \text{B})$$

- les valeurs ainsi déterminées, pour le débit d'air d'injection (Dai) et pour le débit d'air de dilution (Dad), sont converties respectivement en signaux de réglage d'organes d'ajustement du débit d'air d'injection et du débit d'air de dilution, placés sur les arrivées d'air vers l'injecteur.

L'invention fournit ainsi une solution technique qui, bien que fondée sur des éléments empiriques, et en admettant certaines approximations, conduit à des résultats qui se sont avérés satisfaisants, avec l'avantage de la suppression de tous capteurs de pression et/ou de débit et des boucles de retour d'asservissement associées à de tels capteurs, la solution proposée étant une régulation en boucle ouverte.

Il arrive que pour le revêtement de poudre de pièces ayant une forme particulièrement complexe, par exemple disposant d'au moins une cavité profonde, l'opérateur soit obligé d'augmenter le niveau du débit d'air de dilution de manière à accélérer les particules de poudre en sortie de la buse du pulvérisateur de poudrage. C'est-à-dire qu'il impose un débit minimum d'air de dilution Dadm mme si le calcul décrit précédemment donne une valeur nulle pour ce débit d'air.

Dans ce cas, le procédé de l'invention fonctionnera comme décrit auparavant en ajoutant Dadm à la valeur de Dad résultant du calcul.

Par exemple, le procédé devient dans ce dernier cas:

- le débit de poudre (Dp) est considéré comme proportionnel au débit d'air d'injection (Dai) et au débit d'air de dilution (Dad), selon la formule:

$$\text{Dp} = \text{A*Dai-B*Dad}$$

- une valeur minimale Dam du débit d'air total (Dt = Dai + Dad), correspondant à une vitesse minimale du flux d'air dans le conduit d'alimentation, est fixée,
- une valeur minimale Dadm du débit d'air de dilution est également fixée,
- pour une valeur de consigne du débit de poudre (Dp), le débit d'air d'injection (Dai) est déduit de la formule précédente en supposant dans un premier temps que Dad = Dadm :

$$\text{Dai} = (\text{Dp} + \text{B*Dadm})/\text{A}$$

- si le débit d'air d'injection (Dai) ainsi déterminé est supérieur au débit minimum (Dam), cette valeur de débit d'air d'injection (Dai) est retenue, et le débit d'air de dilution (Dad) est choisi comme étant égal à Dadm, ou
- si le débit d'air d'injection (Dai) ainsi déterminé est inférieur au débit minimum (Dam), on suppose que l'on ajoute de l'air de dilution de telle manière que
Dam = Dai + Dad et qu'on a une valeur constante du débit minimum d'air de dilution Dadm, et on déduit Dai et Dad des formules suivantes:

$$\text{Dai} = (\text{Dp} + \text{B*(Dam} + \text{Dadm})) / (\text{A} + \text{B})$$

$$\text{Dad} = (\text{A*Dam-Dp}) / (\text{A} + \text{B}) + \text{Dadm}$$

- les valeurs ainsi déterminées, pour le débit d'air d'injection (Dai) et pour le débit d'air de dilution (Dad), sont converties respectivement en signaux de réglage d'organes d'ajustement du débit d'air d'injection et du débit d'air de dilution, placés sur les arrivées d'air vers l'injecteur.

Pour la mise en oeuvre du procédé précédemment défini, la présente invention a aussi pour objet un dispositif d'injection et de transport de poudre, plus particulièrement pour l'alimentation d'un appareil de projection de peinture ou autre produit de revêtement en poudre, ce dispositif comprenant essentiellement, en combinaison:

- un injecteur relié à une arrivée d'air d'injection depuis une source extérieure, à une arrivée de poudre depuis un récipient, et à une arrivée d'air de dilution depuis une source extérieure;
- une première électrovanne proportionnelle placée sur l'arrivée d'air d'injection;
- une seconde électrovanne proportionnelle placée sur l'arrivée d'air de dilution;
- un module de réglage recevant la consigne de débit de poudre (Dp) et possédant des sorties reliées aux électrovannes proportionnelles respectivement placées sur les arrivées d'air d'injection et d'air de dilution, le module de réglage comporte des moyens de calculs nécessaires du débit d'air d'injection (Dai) et, le cas échéant, du débit de dilution (Dad) selon la formule:

$$Dp = A*Dai-B*Dad$$

dans laquelle A et B sont des coefficients déterminés à partir des mesures effectuées sur un injecteur à effet Venturi du type concerné; une mémoire, dans laquelle sont stockées les valeurs des coefficients de proportionnalité A et B, ainsi que la valeur minimale Dam fixée du débit d'air total Dt = Dai + Dad, pour déterminer, en tenant compte de la consigne de débit de poudre (Dp), les débits d'air d'injection (Dai) et d'air de dilution (Dad), et en déduire les valeurs correspondantes des signaux de réglage des deux électrovannes proportionnelles.

De plus, il peut être prévu qu'une valeur minimale de débit d'air de dilution puisse être introduite dans le module de réglage.

Le dispositif ainsi constitué a l'avantage d'utiliser de simples électrovannes proportionnelles, qui sont des produits standards, classiquement utilisés dans le domaine de la projection de peinture (contrairement aux servomoteurs proposés par plusieurs des documents antérieurs précités). Recevant des signaux électriques issus du module de réglage, et fonctions des valeurs des débits d'air d'injection et de dilution déterminés par ces modules, les deux électrovannes adaptent en permanence les débits d'air d'injection et de dilution de façon à obtenir, à tout moment, le débit de poudre désiré. On comprend que le recours à de telles électrovannes contribue encore à la simplicité du système et à son faible coût.

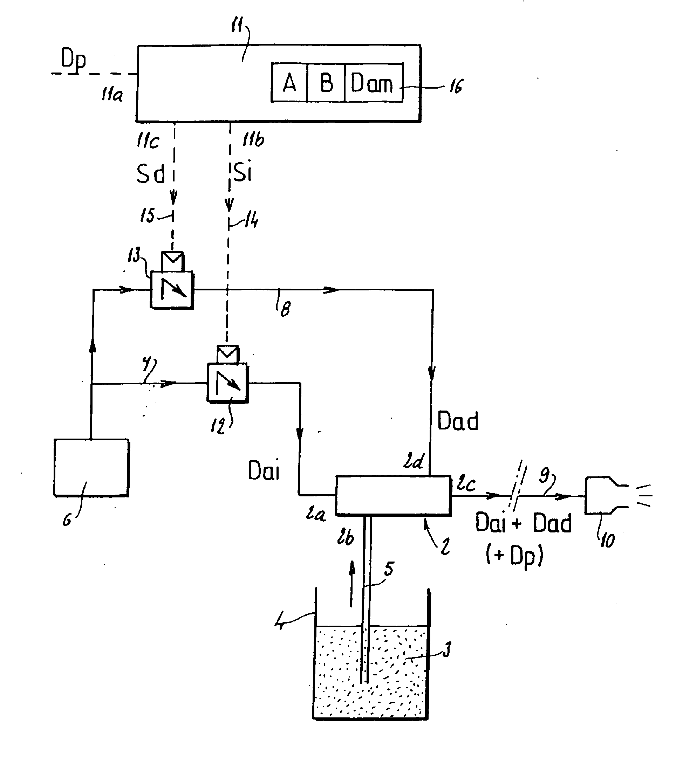

L'invention sera mieux comprise à l'aide de la description qui suit, en référence au dessin schématique annexé représentant, à titre d'exemple, une forme de réalisation de ce dispositif d'injection et de transport de poudre.

L'unique figure du dessin montre, sous forme de schéma de principe, un tel dispositif appliqué à l'alimentation d'un appareil de projection de peinture, et mettant en oeuvre le procédé de régulation de débit de poudre, objet de l'invention.

Sur le dessin, est indiqué très schématiquement en 2 l'injecteur à effet Venturi ou « pompe à poudre », qui comporte une entrée axiale d'air principal 2a, ou entrée d'air d'injection, et une arrivée latérale de poudre 2b, ainsi que, vers sa sortie 2c également axiale, une arrivée latérale d'air supplémentaire 2d, ou air de dilution.

La poudre 3 à aspirer est contenue dans un réservoir ou bac de poudre 4, relié par un court conduit d'aspiration 5 à l'arrivée latérale de poudre 2b de l'injecteur 2.

Une source d'air comprimé 6 alimente un conduit d'amenée d'air principal 7, qui aboutit à l'entrée d'air d'injection 2a de l'injecteur 2. Le conduit d'air principal 7 comporte une dérivation 8 qui aboutit à l'arrivée latérale d'air supplémentaire 2d, et qui constitue ainsi un conduit d'amenée d'air de dilution à l'injecteur 2.

La sortie 2c de l'injecteur 2 constitue le point de départ d'un conduit d'alimentation 9 d'un pulvérisateur de peinture 10, situé à plus ou moins grande distance, sur un appareil de projection de peinture non représenté en détail, en particulier un robot de peinture.

D'une façon générale, la poudre 3 aspirée par l'injecteur 2 est mélangée à l'air dans ce dernier, de sorte qu'un débit de poudre transportée par un flux d'air est délivré à la sortie 2c de l'injecteur 2, et parcourt tout le conduit 9 pour alimenter le pulvérisateur 10.

Pour réguler le débit de poudre délivré à la sortie 2c de l'injecteur 2, il est prévu un module électronique de réglage 11, qui reçoit à une entrée 11 a une consigne de débit de poudre Dp.

Les éléments de régulation comprennent aussi une première électrovanne proportionnelle 12, placée sur le conduit d'amenée d'air principal 7, ou air d'injection, et une seconde électrovanne proportionnelle 13, placée sur le conduit d'amenée d'air de dilution 8.

Le module de réglage 11 comporte une sortie 11 b reliée, par une liaison électrique 14, à la première électrovanne proportionnelle 12. Ce module de réglage 11 comporte une autre sortie 11c reliée, par une liaison électrique 15, à la seconde électrovanne proportionnelle 13.

En cours de fonctionnement, le module de réglage 11, recevant la consigne de débit de poudre Dp, en déduit les réglages des deux électrovannes proportionnelles 12 et 13, qui correspondent aux valeurs appropriées du débit d'air d'injection Dai et du débit d'air de dilution Dad. Dans le détail, et en se référant à un exemple pratique particulier, le mode opératoire est le suivant :

Le débit de poudre Dp est considéré, en première approximation, comme proportionnel au débit d'air d'injection Dai et au débit d'air de dilution Dad, selon la formule : Dp = A.Dai - B.Dad dans laquelle A et B sont des coefficients déterminés à partir des mesures effectuées sur un injecteur 2 à effet Venturi du type concerné.

De plus, pour éviter les pulsations du débit de poudre Dp, il faut que la vitesse de l'air dans le conduit d'alimentation 9 du pulvérisateur 10 soit supérieure à 10 mètres/seconde. Ceci peut s'exprimer, pour un conduit 9 d'une longueur d'une dizaine de mètres et d'un diamètre intérieur égal à 10 millimètres (à titre d'exemple), par la relation : Dai + Dad $\geq$ 3,4 m$^3$/heure.

Partant de ces relations, le processus mis en oeuvre dans le module de réglage 11 est donc le suivant :

- on fixe une valeur minimale Dam pour le débit total d'air Dt = Dai + Dam, par exemple 3,4 m$^3$ /heure, cette valeur pouvant être modifiée par paramétrage ;
- pour un débit de poudre donné Dp, on déduit le débit d'air d'injection correspondant Dai par la formule précitée en supposant dans un premier temps qu'il n'y a pas d'air de dilution, soit : Dai = Dp/A
- si le débit d'air d'injection Dai, ainsi déterminé, est supérieur ou égal à 3,4 m$^3$/heure, on applique la valeur de débit d'air d'injection Dai trouvée, et la valeur du débit d'air de dilution Dad est choisie égale à zéro (Dad = 0) ;
- par contre, si le débit d'air d'injection Dai déterminé comme indiqué plus haut est inférieur à 3,4 m$^3$/heure, on suppose que l'on ajoute de l'air de dilution de telle manière que Dam = Dai + Dad et on déduit Dai et Dad des formules suivantes :

$$Dai = (Dp + B.Dam)/(A + B)$$

$$Dad = (A.Dam - Dp)/(A + B)$$

Pour effectuer les calculs nécessaires, le module de réglage 11 comporte une mémoire 16, dans laquelle sont stockées les valeurs des coefficients de proportionnalité A et B, ainsi que la valeur minimale Dam du débit d'air, soit 3,4 m$^3$/heure dans l'exemple ici choisi.

Les valeurs ainsi trouvées Dai et Dad, pour les débits d'air d'injection et d'air de dilution, restent approximatives car elles supposent la linéarité des courbes représentatives du débit de poudre Dp en fonction des débits d'air Dai et Dad, mais ces valeurs sont suffisantes par rapport au but visé.

A partir des valeurs Dai et Dad de ces débits d'air, le module de réglage 11 déduit les valeurs de réglage correspondantes des deux vannes proportionnelles 12 et 13. Le module de réglage 11 délivre ainsi, sur sa sortie 11b, un premier signal de réglage Si qui est amené, par la liaison 14, à la première électrovanne proportionnelle 12, pour imposer le débit d'air d'injection Dai admis dans l'injecteur 2 par le conduit d'amenée d'air principal 7. De manière analogue, le module de réglage 11 délivre, sur sa sortie 11 c, un second signal de réglage Sd qui est amené, par la liaison 15, à la seconde électrovanne proportionnelle 13, pour imposer le débit d'air de dilution Dad admis dans l'injecteur 2 par le conduit dérivé 8.

Chaque électrovanne proportionnelle 12 ou 13 comporte, par exemple, une bobine électromagnétique déplaçant un noyau mobile en forme de pointeau, appuyant plus ou moins sur une membrane agissant ainsi comme un restricteur de débit. Le degré d'ouverture de chaque électrovanne proportionnelle 12 ou 13 peut ainsi être modifié, en continu, entre une valeur nulle et une valeur maximale, la possibilité d'obtention d'un débit d'air nul étant importante pour l'électrovanne 13 dosant le débit d'air de dilution Dad, compte tenu des spécificités du procédé de l'invention.

L'on ne s'éloignerait pas du cadre de l'invention, telle que définie dans les revendications annexées :

- en adaptant le procédé de régulation du débit de poudre, en particulier en ajustant la valeur minimale du débit total d'air de 3,4 m$^3$/heure, selon la longueur et la section du conduit alimentant l'appareil de projection de peinture ;
- en utilisant des électrovannes proportionnelles de tout type ;
- en destinant le procédé et le dispositif de l'invention à l'alimentation de tous appareils utilisateurs de poudre véhiculée par un flux d'air.

**Revendications**

1. Procédé de régulation du débit de poudre (Dp) dans un dispositif de fourniture d'un débit de poudre transportée par un flux d'air, avec aspiration de la poudre (3) par effet Venturi, depuis un récipient (4), au travers d'un injecteur (2) recevant à son entrée (2a) un débit d'air d'injection (Dai) et avec injection, vers la sortie (2c) de l'injecteur (2), d'un débit d'air supplémentaire dit air de dilution (Dad), s'ajoutant au débit d'air d'injection (Dai) pour l'alimentation, par un conduit (9), d'un appareil (10) de projection de peinture ou autre produit de revêtement en poudre, dans lequel:

   - le débit de poudre (Dp) est considéré comme proportionnel au débit d'air d'injection (Dai) et au débit d'air de dilution (Dad), selon la formule:

$$\texttt{Dp = A*Dai-B*Dad}$$

   - dans laquelle A et B sont des coefficients déterminés à partir des mesures effectuées sur un injecteur (2) à effet Venturi du type concerné;
   - une valeur minimale Dam du débit d'air total (Dt = Dai + Dad), correspondant à une vitesse minimale du flux d'air dans le conduit d'alimentation, est fixée,
   - pour une valeur de consigne du débit de poudre(Dp), le débit d'air d'injection (Dai) est déduit de la formule précédente en supposant dans un premier temps qu'il n'y a pas d'air de dilution:

$$\texttt{Dai = Dp/A}$$

   - si le débit d'air d'injection (Dai) ainsi déterminé est supérieur au débit minimum (Dam), cette valeur de débit d'air d'injection (Dai) est retenue, et le débit d'air de dilution (Dad) est choisi comme nul, ou
   - si le débit d'air d'injection (Dai) ainsi déterminé est inférieur au débit minimum (Dam), on suppose quel'on ajoute de l'air de dilution de telle manière que Dam = Dai + Dad et on déduit Dai et Dad des formules suivantes:

$$\texttt{Dai= (Dp + B. Dam)/ (A + B)}$$

$$\texttt{Dad = (A. Dam-Dp)/ (A + B)}$$

   - les valeurs ainsi déterminées, pour le débit d'air d'injection (Dai) et pour le débit d'air de dilution (Dad), sont converties respectivement en signaux de réglage (Si, Sd) d'organes d'ajustement (12,13) du débit d'air d'injection et du débit d'air de dilution, placés sur les arrivées d'air (7,8) vers l'injecteur (2).

2. Procédé selon la revendication 1, **caractérisé en ce qu'**une valeur minimale d'air de dilution (Dadm) est introduite dans le procédé.

3. Dispositif d'injection et de transport de poudre, plus particulièrement pour l'alimentation d'un appareil (10) de projection de peinture ou autre produit de revêtement en poudre, qu'il comprend, en combinaison:

   - un injecteur (2) relié à une arrivée d'air d'injection (7) depuis une source extérieure (6), à une arrivée (5) de poudre (3) depuis un récipient (4), et à une arrivée d'air de dilution (8) depuis une source extérieure (6);
   - une première électrovanne proportionnelle (12) placée sur l'arrivée d'air d'injection (7);
   - une seconde électrovanne proportionnelle (13) placée sur l'arrivée d'air de dilution (8);
   - un module de réglage (11) recevant la consigne de débit de poudre (Dp), et possédant des sorties (11 b, 11 c) reliées aux électrovannes proportionnelles (12,13) respectivement placées sur les arrivées d'air d'injection (7) et d'air de dilution (8), **caractérisé en ce que** le module de réglage (11) comporte des moyens de calculs nécessaires du débit d'air d'injection (Dai) et, le cas échéant, du débit de dilution (Dad) selon la formule: Dp = A*Dai-B*Dad dans laquelle A et B sont des coefficients déterminés à partir des mesures effectuées sur un injecteur (2) à effet Venturi du type concerné; une mémoire (16), dans laquelle sont stockées les valeurs des coefficients de proportionnalité A et B, ainsi que la valeur minimale (Dam) fixée du débit d'air total (Dt = Dai + Dad), pour déterminer, en tenant compte de la consigne de débit de poudre (Dp), les débits d'air d'injection (Dai) et d'air de dilution (Dad), et en déduire les valeurs correspondantes des signaux de réglage (Si, Sd) des deux électrovannes proportionnelles (12, 13).

4. Dispositif selon la revendication 3, **caractérisé en ce qu'**une valeur minimale de débit d'air de dilution (Dadm) peut être introduite dans le module de réglage (11).

**Claims**

1. Method for regulation of the delivery of powder (Dp) in a device for supply of a delivery of powder which is transported by a flow of air, with suction of the powder (3) by Venturi effect, from a container (4), through an injector (2) which receives at its intake (2a) a delivery of injection air (Dai), and with injection towards the output (2c) of the injector (2), of a delivery of additional air known as dilution air (Dad) which is added to the delivery of injection air (Dai) for supply, via a pipe (9), to a device (10) for spraying with paint or another powder coating product, wherein:

   - the delivery of powder (Dp) is considered to be proportional to the delivery of injection air (Dai) and to the delivery of dilution air (Dad) according to the formula:

$$DP = A*Dai-B*Dad$$

   - wherein A and B are coefficients determined on the basis of measurements made on a Venturi-effect injector (2) of the type concerned;
   - a minimal value Dam of the total delivery of air (Dt = Dai + Dad), corresponding to a minimal speed of the flow of air in the supply pipe is established;
   - for a set value of the delivery of powder (Dp), the delivery of injection air (Dai) is deduced from the preceding formula, on the assumption that initially there is no dilution air:

$$Dai = Dp/A$$

   - if the delivery of injection air (Dai) thus determined is greater than the minimum delivery (Dam), this value for delivery of injection air (Dai) is selected, and the delivery of dilution air (Dad) is chosen as zero, or
   - if the delivery of injection air (Dai) thus determined is lower than the minimum delivery (Dam), it is assumed that dilution air is added such that Dam = Dai + Dad, and Dai and Dad are deduced from the following formulae:

$$Dai = (Dp + B. Dam)/ (A + B)$$

$$Dad = (A. Dam-Dp) / (A + B)$$

   - the values thus determined for the delivery of injection air (Dai) and for the delivery of dilution air (Dad) are converted respectively into signals (Si, Sd) for regulation of units (12, 13) for adjustment of the delivery of injection air and of the delivery of dilution air, placed on the inlets (7, 8) for air going towards the injector (2).

2. Method according to claim 1, **characterised in that** a minimal value of dilution air (Dadm) is introduced into the method.

3. Device for injection and conveying of powder, more particularly for the supply to a device (10) for spraying with paint or another powder coating product, which comprises, in combination:

   - an injector (2) which is connected to an inlet (7) for injection air from an external source (6), to an inlet (5) for powder (3) from a container (4), and to an inlet (8) for dilution air from an external source (6);
   - a first proportional solenoid valve (12) which is placed on the injection air inlet (7);

- a second proportional solenoid valve (13) which is placed on the dilution air inlet (8);
- a regulation module (11) which receives the powder delivery value (Dp), and has outputs (11b, 11c) connected to the proportional solenoid valves (12, 13) which are placed respectively on the injection air (7) and dilution air (8) inlets, **characterised in that** the regulation module (11) comprises calculation means which are necessary for the injection air delivery (Dai) and, if applicable, for the dilution delivery (Dad) according to the formula: Dp = A*Dai-B*Dad, wherein A and B are coefficients determined on the basis of measurements made on a Venturi-effect injector (2) of the type concerned; a memory (16) in which the values of the coefficients of proportionality A and B are stored, as well as the minimal value (Dam) established for the total air delivery (Dt = Dai + Dad), in order to determine, taking into account the set powder delivery value (Dp), the injection air (Dai) and dilution air (Dad) deliveries, and to deduce from these the corresponding values of the regulation signals (Si, Sd) of the two proportional solenoid valves (12, 13).

**4.** Device according to claim 3, **characterised in that** a minimal value of dilution air delivery (Dadm) can be introduced into the regulation module (11).

**Patentansprüche**

**1.** Verfahren zum Regeln des Pulverdurchsatzes (Dp) in einer Zufuhrvorrichtung für einen Pulverstrom, der von einem Luftstrom transportiert wird, mit Absaugung des Pulvers (3) mittels Venturieffekt aus einem Behälter (4) durch einen Injektor (2) hindurch, der an seinem Eingang (2a) einen Injektionsluftstrom (Dai) erhält, und mit Injektion eines zusätzlichen Luftstromes, genannt Verdünnungsluft (Dad), gegen den Ausgang (2c) des Injektors (2) hin, welcher dem Injektionsluftstrom (Dai) hinzugefügt wird, um über einen Kanal (9) ein Gerät (10) zum Auftragen von Lack oder von einem anderen pulverförmigen Beschichtungsmaterial zu versorgen, bei welchem:

- Der Pulverstrom (Dp) als proportional zum Injektionsluftstrom (Dai) und zum Verdünnungsluftstrom (Dad) angesehen wird, gemäß der Gleichung:

$$Dp = A*Dai - B*Dad,$$

- in der A und B Koeffizienten sind, die durch Messungen, die an einem Venturi-Injektor (2) zutreffenden Typs durchgeführt wurden, bestimmt wurden;
- wobei ein minimaler Wert Dam des Gesamtluftdurchsatzes (Dt = Dai + Dad), der einer minimalen Geschwindigkeit des Luftstroms in dem Versorgungskanal entspricht, festgelegt wird,
- wobei für einen Sollwert des Pulverdurchsatzes (Dp) der Injektionsluftdurchsatz (Dai) aus der vorhergehenden Formel hergeleitet, wobei in einem ersten Schritt angenommen wird, dass es keine Verdünnungsluft gibt:

$$Dai = Dt/A$$

- wobei dann, wenn der auf diese Weise bestimmte Injektionsluftdurchsatz (Dai) größer ist als der Minimaldurchsatz (Dam) dieser Wert des Injektionsluftdurchsatzes (Dai) beibehalten wird und der Verdünnungsluftdurchsatz (Dad) auf Null gesetzt wird, oder
- dann, wenn der auf diese Weise bestimmte Injektionsluftdurchsatz (Dai) kleiner ist als der Minimaldurchsatz (Dam) angenommen wird, dass man derart Verdünnungsluft hinzuführt, dass Dam = Dai + Dad ist und man Dai und Dad aus den folgenden Formeln erhält:

$$Dai = (Dp + B*Dam)/(A + B)$$

$$Dad = (A*Dam - Dp)/(A + B)$$

- und wobei dann die auf diese Weise bestimmten Werte für den Injektionsluftdurchsatz (Dai) und für den Verdünnungsluftdurchsatz (Dad) jeweils in Regelsignale (Si, Sd) für Stellglieder (12, 13) für den Injektionsluftdurchsatz und den Verdünnungsluftdurchsatz umgesetzt werden, welche in den Luftzufuhrleitungen (7, 8) zu dem Injektor (2) angeordnet sind.

2. Verfahren nach dem Anspruch 1, **dadurch gekennzeichnet, dass** ein Minimalwert für Verdünnungsluft (Dadm) in das Verfahren eingeführt wird.

3. Vorrichtung zur Injektion und zum Transport von Pulver, insbesondere zur Versorgung eines Geräts (10) zum Auftragen von Lack oder einem anderen pulverförmigen Beschichtungsmaterial, die in Kombination aufweist:

   - einen Injektor (2), der verbunden ist mit einem von einer von einer externen Quelle (6) gespeisten Injektionslufteinlass (7), mit einem Einlass (5) für Pulver (3), der aus einem Behälter (4) versorgt wird, und mit einem Verdünnungslufteinlass (8), der aus einer externen Quelle (6) versorgt wird;
   - ein erstes Proportional-Magnetventil (12), das am Injektionslufteinlass (7) angeordnet ist;
   - ein zweites Proportional-Magnetventil (13), das am Verdünnungslufteinlass (8) angeordnet ist;
   - eine Regeleinheit (11), die den Pulverdurchsatz-Sollwert (Dp) erhält und Ausgänge (11b, 11c) aufweist, die mit den am Injektionsluft- bzw. Verdünnungslufteinlass (7,8) angeordneten Proportional-Magnetventilen (12,13) verbunden sind, **dadurch gekennzeichnet, dass** die Regeleinheit (11) Rechenmittel aufweist, wie sie zur Berechnung des Injektionsluftdurchsatzes (Dai) und gegebenenfalls des Verdünnungsdurchsatzes (Dad) gemäß der Formel $Dp = A*Dai - B*Dad$ benötigt werden, in der A und B Koeffizienten sind, die durch Messungen bestimmt wurden, die an einem Venturi-Injektor (2) zutreffenden Typs durchgeführt wurden, und einen Speicher (16) aufweist, in dem die Werte der Proportionalkoeffizienten A und B, sowie der festgelegte Minimalwert (Dam) für den Gesamtluftdurchsatz ($Dt = Dai + Dad$) gespeichert sind, um unter Berücksichtigung des Pulverdurchsatz-Sollwertes (Dp) den Injektionsluftdurchsatz (Dai) und den Verdünnungsluftdurchsatz (Dad) zu bestimmen und daraus die entsprechenden Werte für Regelsignale (Si, Sd) der beiden Proportional-Magnetventile (12, 13) herzuleiten.

4. Vorrichtung nach Anspruch 3, **dadurch gekennzeichnet, dass** ein Minimalwert der Verdünnungsluftmenge (Dadm) in die Regeleinheit (11) eingebracht werden kann.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2680416
- EP 0636420 A
- EP 0686430 A

- WO 0010726 A
- WO 0010727 A
- DE 19838276 A